# EUROPÄISCHE PATENTANMELDUNG

(11) **EP 1 231 533 A2**
(43) Veröffentlichungstag der Anmeldung: **14.08.2002**
(21) Anmeldenummer: 02450028.2
(22) Anmeldetag: 07.02.2002
(51) Int. Cl.: G06F 1/16

(54) **Vorrichtung zum Ablegen von Gegenständen**

(30) Priorität: 08.02.2001 AT 952001 U
(71) Anmelder: Ögerer, Manfred, 4600 Wels (AT)
(72) Erfinder: Ögerer, Manfred, 4600 Wels (AT)
(74) Vertreter: Hübscher, Heiner, Dipl.-Ing.

(57) **Zusammenfassung**

Es wird eine Vorrichtung zum Ablegen von Gegenständen mit einem Fächer (10) aufweisenden Gestell (3) beschrieben. Um vorteilhafte Konstruktionsbedingungen zu schaffen, wird vorgeschlagen, daß das Gestell (3) aus einem oben auf dem Gehäuse (1) eines Monitors (2) abstützbaren Rahmen besteht, dessen seitlich neben dem Bildschirm (6) des Monitors (2) verlaufende Rahmenschenkel (7) die Fächer (10) tragen.

## Beschreibung

Die Erfindung bezieht sich auf eine Vorrichtung zum Ablegen von Gegenständen mit einem Fächer aufweisenden Gestell.

Arbeitstische für Rechner bieten im allgemeinen neben den Stellflächen für einen Monitor und eine Tastatur nur beschränkte Ablageflächen für Dokumente und Arbeitsbehelfe, so daß kaum Platz bleibt, beispielsweise persönliche Gegenstände eines Benutzers eines solchen Arbeitsplatzes griffbereit aufzubewahren, ohne die vorhandene Arbeitsfläche hiefür zu benützen. Werden zu diesem Zweck Behälter oder Gestelle mit entsprechenden Fächern eingesetzt, so benötigen diese Behälter oder Gestelle einen Teil der Arbeitsfläche des Arbeitstisches als Stellfläche.

Der Erfindung liegt somit die Aufgabe zugrunde, eine Vorrichtung zum Ablegen von Gegenständen so auszugestalten, daß im Bereich eines Arbeitstisches für einen Rechner Ablagefächer bereitgestellt werden können, ohne auf einen Teil der Arbeitsfläche verzichten zu müssen.

Die Erfindung löst die gestellte Aufgabe dadurch, daß das Gestell aus einem oben auf dem Gehäuse eines Monitors abstützbaren Rahmen besteht, dessen seitlich neben dem Bildschirm des Monitors verlaufende Rahmenschenkel die Fächer tragen.

Durch ein Gestell, dessen Rahmen oben auf dem Gehäuse eines Monitors abgestützt wird, bedarf es keiner Stellfläche auf dem Arbeitstisch, um Fächer zur Aufnahme verschiedener Gegenstände vorsehen zu können. Die an den seitlich neben dem Bildschirm des Monitors verlaufenden Rahmenschenkeln angeordneten Fächer sind frei zugänglich, ohne die Sicht auf den Bildschirm zu beeinträchtigen oder die Arbeitsfläche des Arbeitstisches zu schmälern. Da der Monitor eines Arbeitstisches im allgemeinen frei aufgestellt ist, bietet sein Gehäuse in vorteilhafter Weise einen sonst nicht genutzten Träger für ein mit entsprechenden Aufnahmefächern versehenes Gestell.

Damit das Gestell in einer für die Bedienung der Aufnahmefächer ausreichend stabilen Art abgestützt werden kann, können die seitlichen Rahmenschenkel durch einen unteren, auf der Vorderseite des Gehäuses in dessen unteren Randbereich abstützbaren Querholm verbunden werden. Die Gewichtsbelastung dieses über den unteren Querholm geschlossenen Rahmens durch die Fächer und die in den Fächern abgelegten Gegenstände bedingt eine Drehmomentbelastung des Gestells, dessen unterer Querholm daher an den unteren Randbereich auf der Vorderseite des Gehäuses des Monitors angedrückt wird, ohne daß es einer zusätzlichen Befestigung bedarf. Ein solches Gestell läßt sich daher auch ohne weiteres wieder vom Gehäuse des Monitors abheben. Der untere Querholm bietet außerdem die Möglichkeit, eine zusätzliche Ablagetasse anzubringen.

Ist der Rahmen im Bereich eines oberen Querholmes bzw. im Bereich des unteren Querholmes über Stützen auf der Oberseite bzw. auf der Vorderseite des Monitorgehäuses abstützbar, so kann in einfacher Weise eine vorteilhafte Rahmenhalterung mit einer für die Zugänglichkeit zu den Fächern günstigen Rahmenneigung verbunden werden. Über auf den Querholmen drehverstellbaren Stützen läßt sich außerdem eine einfache Anpassung des Gestells an unterschiedliche Bildschirmhöhen erreichen. Soll der Rahmen zusätzlich an die Größe des Monitors angepaßt werden, so empfiehlt es sich, insbesondere die Querholme in ihrer Länge einstellbar auszubilden.

Die Fächer können mit den seitlichen Rahmenschenkeln unlösbar verbunden sein. Damit unterschiedlichen Bedürfnissen hinsichtlich der Art der abzulegenden Gegenstände entsprochen werden kann, sollten jedoch die vorzugsweise als Aufnahmetaschen ausgebildeten Fächer an den seitlichen Rahmenschenkeln schnappverschlußartig angeklemmt werden können, so daß unterschiedliche Arten von Fächern zusammengestellt und am Gestell einfach befestigt werden können.

In der Zeichnung ist der Erfindungsgegenstand beispielsweise dargestellt.

Es zeigen
Fig. 1 eine erfindungsgemäße Vorrichtung zum Ablegen von Gegenständen in einer vereinfachten Seitenansicht und
Fig. 2 diese Vorrichtung in einer Vorderansicht.

Wie das dargestellte Ausführungsbeispiel erkennen läßt, ist auf dem Gehäuse 1 eines Monitors 2 ein Gestell 3 abgestützt, das aus einem oberen Querholm 4, einem unteren Querholm 5 und zwei seitlich neben dem Bildschirm 6 des Monitors 2 verlaufenden Rahmenschenkeln 7 besteht. Sowohl der obere Querholm 4 als auch der untere Querholm 5 tragen Stützen 8 über die das Gestell 3 auf dem Gehäuse 1 gelagert ist. Die Auflagen 9 der oberen Stützen 8 am Gehäuse 1 ergeben dabei eine Schwenkachse für das Gestell 3, das bedingt durch seine Gewichtsbelastung um diese Schwenkachse mit dem unteren Querholm 5 gegen die Vorderseite des Gehäuses 1 gedrückt wird, so daß die Stützen 8 des unteren Querholmes 5 in Anlage am Gehäuse 1 gehalten werden. Damit kann in einfacher Weise eine stabile Abstützung des Gestells 3 auf dem Gehäuse 1 sichergestellt werden.

Die seitlichen Rahmenschenkel 7 des Gestells 3 tragen Fächer 10 in Form von Aufnahmetaschen für verschiedene Gegenstände, die in den Fächern 10 zugriffsbereit abgelegt werden können. Die Ausbildung der Fächer 10 kann dabei unterschiedlich ausfallen, um unterschiedlichen Formen der aufzubewahrenden Gegenstände Rechnung zu tragen. Um ein Gestell mit unterschiedlichen Fächern nach den Bedürfnissen des jeweiligen Arbeitsplatzbenützers zusammenstellen zu können, können die Fächer 10 zumindest gruppenweise an den seitlichen Rahmenschenkeln 7 lösbar angeklemmt werden, wobei sich Schnappverschlüsse zu diesem Zweck besonders eignen.

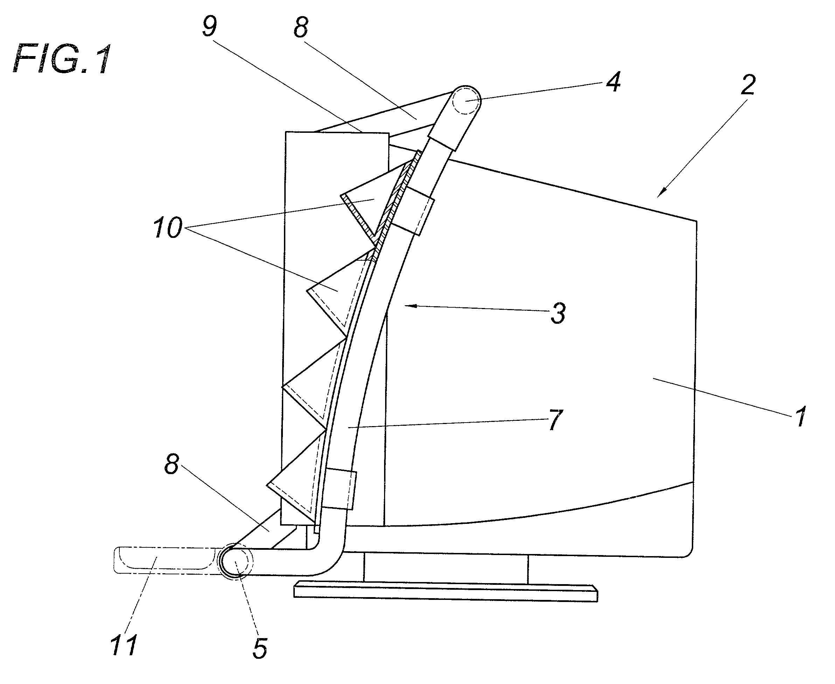

Wie der Fig. 1 entnommen werden kann, kann der untere Querholm 5 als Träger für eine Ablagetasse 11 herangezogen werden, wie dies strichpunktiert angedeutet ist.

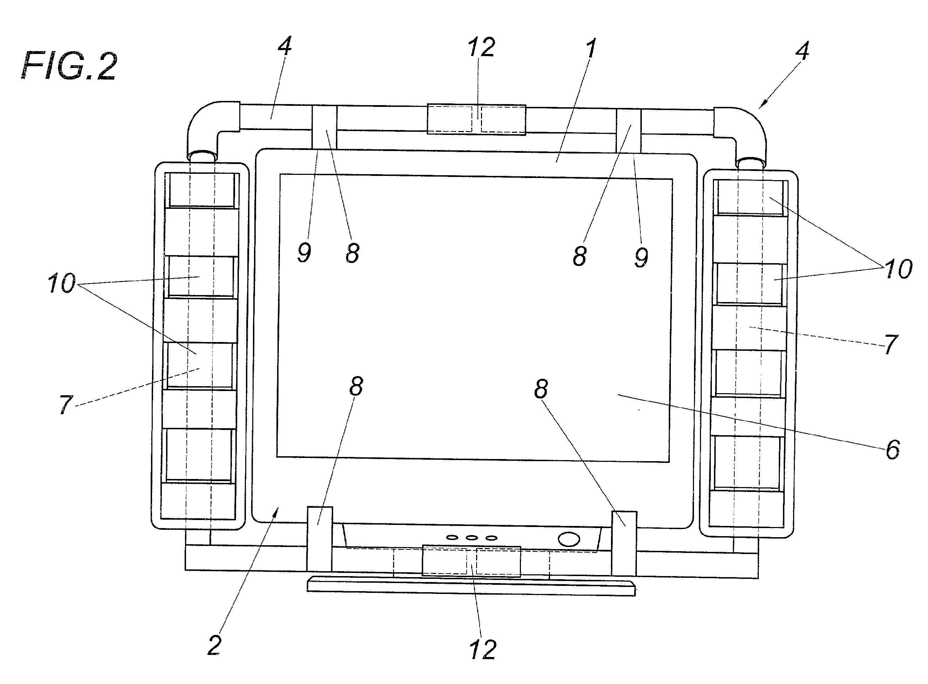

Zur Anpassung des Gestells an unterschiedliche Monitorgrößen können insbesondere die Querholme 4 und 5 in ihrer Länge verstellbar ausgebildet sein. In der Fig. 2 ist diese Verstellbarkeit durch Überwurfmuffen 12 für die geteilten Querholme 4 und 5 angedeutet, die innerhalb dieser Überwurfmuffe 12 axial verlagert werden können. In ähnlicher Weise können auch die seitlichen Rahmenschenkel 7 der Länge nach verstellbar ausgebildet sein, doch hilft die Abstützung des Gestells 3 über die Stützen 8 zur Anpassung, wenn die Auflager 9 der oberen Stützen 8 auf dem Gehäuse in Richtung der Gehäusetiefe verlagert oder um den Querholm 4 verschwenkt werden. Damit eine ausreichend gleitfeste Abstützung der Auflager 9 auf dem Gehäuse 1 sichergestellt werden kann, können diese Auflager mit einer haftvermittelnden Schicht oder Saugnäpfen versehen sein.

Die Erfindung ist selbstverständlich nicht auf das dargestellte Ausführungsbeispiel beschränkt, weil es nicht auf die Ausgestaltung des Gestells 3 oder der Fächer 10 ankommt, sondern darauf, daß das Gehäuse 1 des Monitors 2 als Träger für das Gestell 3 dient, das zumindest im Bereich der seitlichen Rahmenschenkel 7 Fächer zur Ablage von Gegenständen aufweist. Da das Gestell 3 den Bildschirm 6 zumindest von drei Seiten umschließt, wird eine platzsparende Fachanordnung sichergestellt, ohne die Sicht auf den Bildschirm 6 oder die Zugänglichkeit zum Monitor 2 zu beeinträchtigen.

## Patentansprüche

1. Vorrichtung zum Ablegen von Gegenständen mit einem Fächer (10) aufweisenden Gestell (3), **dadurch gekennzeichnet, daß** das Gestell (3) aus einem oben auf dem Gehäuse (1) eines Monitors (2) abstützbaren Rahmen besteht, dessen seitlich neben dem Bildschirm (6) des Monitors (2) verlaufende Rahmenschenkel (7) die Fächer (10) tragen.

2. Vorrichtung nach Anspruch 1, **dadurch gekennzeichnet, daß** die seitlichen Rahmenschenkel (7) durch einen unteren, auf der Vorderseite des Gehäuses (1) in dessen unteren Randbereich abstützbaren Querholm (5) verbunden sind.

3. Vorrichtung nach Anspruch 2, **dadurch gekennzeichnet, daß** der untere Querholm (5) eine Ablagetasse (11) trägt.

4. Vorrichtung nach einem der Ansprüche 1 bis 3, **dadurch gekennzeichnet, daß** der Rahmen im Bereich eines oberen Querholmes (4) bzw. im Bereich des unteren Querholmes (5) über Stützen (8) auf der Oberseite bzw. auf der Vorderseite des Monitorgehäuses (1) abstützbar ist.

5. Vorrichtung nach einem der Ansprüche 1 bis 4, **dadurch gekennzeichnet, daß** insbesondere die Querholme (4, 5) in ihrer Länge einstellbar ausgebildet sind.

6. Vorrichtung nach einem der Ansprüche 1 bis 5, **dadurch gekennzeichnet, daß** die vorzugsweise als Aufnahmetaschen ausgebildeten Fächer (10) an den seitlichen Rahmenschenkeln (7) schnappverschlußartig anklemmbar sind.
